# EUROPÄISCHE PATENTSCHRIFT

(11) **EP 2 396 668 B1**
(45) Veröffentlichungstag und Bekanntmachung des Hinweises auf die Patenterteilung: **27.01.2016**
(21) Anmeldenummer: 10704794.6
(22) Anmeldetag: 09.02.2010
(51) Int. Cl.: G01S 5/02, H04H 20/62

(54) **SENSOREN FÜR EIN FLUGZEUG ZUR LOKALISIERUNG VON GERÄTEN**
SENSORS FOR AN AIRCRAFT FOR LOCATING DEVICES
CAPTEURS POUR UN AÉRONEF DESTINÉS À LOCALISER DES APPAREILS

(30) Priorität: 16.02.2009 DE 102009009188; 17.02.2009 US 153053 P
(43) Veröffentlichungstag der Anmeldung: 21.12.2011
(73) Patentinhaber: Airbus Operations GmbH, 21129 Hamburg (DE)
(72) Erfinder: MÜLLER, Jan, 21077 Hamburg (DE); GLASER, Daniel, 22761 Hamburg (DE); SCHWARK, Uwe, 28870 Ottersberg (DE)
(74) Vertreter: Kopf, Korbinian Paul
(86) Internationale Anmeldenummer: PCT/EP2010/051545
(87) Internationale Veröffentlichungsnummer: WO 2010/092037

(56) Entgegenhaltungen:
- US-A1- 2004 077 308
- US-A1- 2004 203 380
- US-A1- 2004 203 904
- US-A1- 2007 042 706
- US-A1- 2007 213 009
- US-A1- 2008 094 212
- US-A1- 2008 163 670
- US-A1- 2009 243 895
- US-A1- 2009 300 379

## Beschreibung

### Verwandte Anmeldungen

Die vorliegende Anmeldung beansprucht die Priorität der US Provisional Patentanmeldung Nr. 61/153,053, eingereicht am 17. Februar 2009, und der deutschen Patentanmeldung Nr. 10 2009 009 188.2, eingereicht am 16. Februar 2009, deren Inhalte hierin durch Referenz inkorporiert werden.

### Gebiet der Erfindung

Die Erfindung betrifft die Lokalisierung von Geräten und Ausrüstungsgegenständen in einem Flugzeug. Insbesondere betrifft die Erfindung einen Sensorknoten für ein Sensornetzwerk in einem Luftfahrzeug, ein Sensornetzwerk mit mehreren Sensorknoten, ein Luftfahrzeug mit einem Sensornetzwerk sowie ein Verfahren zum Bestimmen einer örtlichen Anordnung von mehreren Sensorknoten in einem Luftfahrzeug.

### Technologischer Hintergrund

Der Einbauort von Geräten und Komponenten in einem Flugzeug wird typischerweise in einer entsprechenden Dokumentation beschrieben. Wird ein Gerät an einem anderen Ort eingebaut, muss die Dokumentation geändert werden. Eine automatische, ortabhängige Konfiguration des Gerätes ist nicht möglich.

Zur Verbesserung und Beschleunigung des Wartungsablaufs des Luftfahrzeugs ist es wünschenswert, den Zustand aller relevanten Systemkomponenten und Einbauten zu kennen, insbesondere deren Einbauort.

Sensoren in Flugzeugen werden dazu verwendet, physikalische Messgrößen zu detektieren, mit deren Hilfe Aussagen über den Zustand einer Flugzeugsystemkomponente, etc. getroffen werden können. Typische solche Sensoren sind über entsprechende elektrische Leitungen an eine Stromversorgung sowie an eine Auswerteeinheit angeschlossen. Aufgrund von Gewichtseinschränkungen im Flugzeugbau, sowie der Komplexität der notwendigen elektrischen Leitungsführung für ein Sensornetzwerk werden Sensoren derzeit nur sehr eingeschränkt und nur dort, wo sie unentbehrlich sind, verwendet.

DE 100 04 384 A1 und US 6,587,188 B2 beschreiben Sensoranordnungen zur Erfassung von Temperaturen. Der Sensor weist eine optische Faser auf, mit deren Hilfe Spannungen im Material detektiert werden können. Der Einbau solcher Sensoren ist nicht an allen Orten in einem Flugzeug möglich.

US 2008/0163670 A1 beschreibt ein Verfahren und ein System zur Überwachung von Zuständen von Flugzeugpassagieren mittels eines Sensorsystems.

US 2007/0042706 A1 beschreibt ein System und ein Verfahren zur Lokalisierung von Sensoren in einem Sensornetzwerk mittels Interferenz. Zwei Sensoren schicken zeitgleich Signale verschiedener Frequenz an zwei Empfänger, die diese Signale aufnehmen und die Phasenverschiebungen der Interferenzsignale messen.

### Zusammenfassung der Erfindung

Es ist eine Aufgabe der Erfindung, eine Möglichkeit der automatischen Lokalisierung von Geräten und Einbauten in einem Flugzeug bereitzustellen.

Es sind ein Sensorknoten für ein Sensornetzwerk in einem Luftfahrzeug, ein Sensornetzwerk zum Bestimmen einer örtlichen Anordnung von mehreren Sensorknoten, ein Luftfahrzeug mit einem Sensornetzwerk und ein Verfahren zum Bestimmen einer örtlichen Anordnung von mehreren Sensorknoten in einem Luftfahrzeug gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen den Sensorknoten, das Sensornetzwerk, das Luftfahrzeug und das Verfahren. In anderen Worten lassen sich im Folgenden beispielsweise unter Bezugnahme auf den Sensorknoten genannte Merkmale auch als Verfahrensschritte implementieren, und umgekehrt.

Gemäß einem Ausführungsbeispiel der Erfindung ist ein Sensorknoten für ein Sensornetzwerk in einem Luftfahrzeug, bei dem es sich beispielsweise um ein Passagierflugzeug handelt, angegeben. Der Sensorknoten weist eine Sensoreinheit und eine Kommunikationseinheit auf. Die Sensoreinheit dient dem Erfassen eines Parameters , auf dessen Basis eine Bestimmung der Position des Sensorknotens innerhalb des Sensornetzwerks möglich ist. Insbesondere kann die Sensorposition durch die Übertragung des gemessenen Wertes in geeigneter Weise und die gleichzeitige Beobachtung von dieser Überragung von vielen Beobachtungsorten (andere Sensoren) aus bestimmt werden.

Die Kommunikationseinheit dient dem Übermitteln von Daten, die auf den erfassten Parametern basieren. Die Daten werden an eine zentrale Recheneinheit übermittelt.

Die Datenübermittlung erfolgt drahtlos mittels einer geeigneten Funkkommunikationstechnologie. Beispiele hierfür sind Bluetooth, WLAN, Zigbee oder WiMax. Auch können Kommunikationsverbindungen über WLAN (802.11a/b/g/n oder WLAN 802.11p) oder UWB eingesetzt werden. Es kann jedoch auch eine andere Funkkommunikationstechnologie zur Anwendung kommen.

Der Sensorknoten weist also einerseits die Möglichkeit einer drahtlosen Anbindung an eine zentrale Recheneinheit sowie andererseits eine damit kombinierte Ortungsfunktion auf.

Die Ortung des Sensorknotens (Ortungsfunktion) kann beispielsweise dadurch ermöglicht werden, dass der Sensorknoten Signalparameter von benachbarten Sensorknoten aufnimmt, diese ggf. vorab auswertet, und dann entsprechende Daten an die zentrale Recheneinheit weitersendet. Die zentrale Recheneinheit kann auf Basis dieser Parameter, die relativen Positionen der einzelnen Sensorknoten im Verhältnis zueinander berechnen. Ist der zentralen Recheneinheit die Position mindestens eines Sensorknotens in absoluter Form a-priori bekannt, können die absoluten Positionen aller Sensorknoten ermittelt werden. Die Genauigkeit der Positionsbestimmung hängt maßgeblich davon ab, wie genau der gemessene Signalparameter, die geometrischen Distanzen zwischen den Sensorknoten abbildet. Die Genauigkeit der Ortsbestimmung kann zudem durch Einbringen zusätzlicher a-priori bekannter Information verbessert werden. Zum Beispiel kann der Ortungsfunktion mitgeteilt werden, in welcher Weise sich die Einbauorte der Sensoren innerhalb des überwachten Bereichs verteilen. Somit kann die Ortungsfunktion Kenntnisse über Nachbarschaftsbeziehungen ausnutzen und eine genauere Schätzung der Position vornehmen.

Gemäß einem weiteren Ausführungsbeispiel der Erfindung handelt es sich bei dem Parameter, den die Sensoreinheit des Sensorknotens erfasst, um einen Hochfrequenzsignalparameter.

Auch können mehrere solcher Hochfrequenzsignalparameter erfasst werden. Hierbei kann es sich beispielsweise um eine Sendeleistung, eine Sendesignallaufzeit und/oder eine Sendefrequenz handeln.

An dieser Stelle sei angemerkt, dass eine Vorabauswertung der erfassten Parameter innerhalb des Sensorknotens nicht notwendig ist. Auch kann die gesamte Auswertung in der zentralen Recheneinheit erfolgen.

Gemäß einem weiteren Ausführungsbeispiel der Erfindung ist die Sensoreinheit weiterhin zur Erfassung eines (weiteren) Messwerts ausgeführt, bei dem es sich beispielsweise um eine Temperatur, eine Vibration, eine Beschleunigung, eine Dehnung oder einen Druck handelt.

Auch können bei entsprechender Ausführung des Sensorknotens mehrere solcher Messwerte in einem Sensorknoten erfasst werden (also beispielsweise ein Druck und eine Temperatur).

Auf diese Weise werden also der zentralen Recheneinheit nicht nur Daten, auf deren Basis die Position der einzelnen Sensorknoten bestimmt werden kann, übermittelt, sondern auch weitere Umgebungsdaten, die Aussagen über den Zustand im Bereich des entsprechenden Sensorknotens (also beispielsweise über einen Betriebszustand oder die augenblickliche Konfiguration einer entsprechenden Systemkomponente) zulassen.

Gemäß einem weiteren Ausführungsbeispiel der Erfindung weist der Sensorknoten weiterhin eine Energieversorgungseinheit zur Versorgung des Sensorknotens mit elektrischer Energie auf. Die Energieversorgungseinheit ist hierbei zur autarken Energieversorgung des Sensorknotens durch Energieumwandlung ausgeführt.

Auf diese Weise ist es möglich, dass der Sensorknoten unabhängig von einer externen Energieversorgung betrieben werden kann. Auf diese Weise können elektrische Leitungen eingespart werden.

Gemäß einem weiteren Ausführungsbeispiel der Erfindung weist die Energieversorgungseinheit einen Vibrationsgenerator und/oder einen thermoelektrischen Wandler und/oder eine Antenne zur Aufnahme elektromagnetischer Energie und/oder eine Photovoltaikeinheit bzw. Solarzelle zur Umwandlung von Licht in elektrische Energie zur dezentralen Energieversorgung des Sensorknotens auf.

Der thermoelektrische Wandler dient dazu, einen Temperaturgradienten, der beispielsweise zwischen dem Inneren des Flugzeugs und dem Äußeren des Flugzeugs auftritt, auszunutzen und daraus elektrische Energie zu gewinnen.

Mit Hilfe einer Photovoltaikeinheit ist es möglich, ein ganzes Array von Sensoren mit Energie zu versorgen, indem eine Lichtquelle verwendet wird, welche die unterschiedlichen Photovoltaikeinheiten bestrahlt.

Auch hier sind keine elektrischen Leitungen zur Verbindung der unterschiedlichen Sensorknoten notwendig.

Gemäß einem weiteren Ausführungsbeispiel der Erfindung ist ein Sensornetzwerk zum Bestimmen einer örtlichen Anordnung von mehreren oben und im Folgenden beschriebenen Sensorknoten angegeben. Das Sensornetzwerk weist einen (im Regelfall aber natürlich mehrere) Sensorknoten auf. Weiterhin ist eine zentrale Recheneinheit zum Empfang der von dem Sensorknoten übermittelten Daten und zur Bestimmung der Position des Sensorknotens auf Basis der übermittelten Daten vorgesehen.

Die Datenübertragung erfolgt drahtlos.

Auf diese Weise ist es möglich, die Orte der unterschiedlichen Sensorknoten innerhalb oder außerhalb des Flugzeugs zu ändern. Da die Sensorknoten in einem Kommunikationsnetzwerk (Sensornetzwerk) eingebunden sind, können ihre relativen oder sogar absoluten Positionen auf einfache Weise bestimmt werden.

Gemäß einem weiteren Ausführungsbeispiel der Erfindung erfolgt die Bestimmung der Position des Sensorknotens (bzw. der Sensorknoten) auf Basis einer Korrelation von Daten, die von mehreren Sensorknoten empfangen wurden.

Obgleich jeder einzelne Sensorknoten seine eigene Position zu Beginn der Prozedur nicht kennt, reicht eine Kommunikation zwischen den einzelnen Sensorknoten mit sehr geringer Informationsdichte aus, um die Positionen der Sensorknoten zu bestimmen.

Gemäß einem weiteren Ausführungsbeispiel der Erfindung ist das Sensornetzwerk zur Bestimmung der Position von Sitzen in einer Kabine des Luftfahrzeugs ausgeführt. Hierfür sind die einzelnen Sensorknoten beispielsweise in den entsprechenden Sitzen integriert oder darauf angebracht.

Gemäß einem weiteren Ausführungsbeispiel der Erfindung ist die zentrale Recheneinheit zur Bestimmung der Position der Sitze und der darauf folgenden Übermittlung einer entsprechenden Positionsinformation an die einzelnen Sensorknoten ausgeführt, woraufhin eine automatische Konfiguration der Sitze erfolgen kann.

Die Konfiguration der Sitze ist abhängig von ihrer Position im Flugzeug. Da die Sitzposition automatisch ermittelt wird, kann auch die Konfiguration automatisch erfolgen.

Gemäß einem weiteren Ausführungsbeispiel der Erfindung weist das Sensornetzwerk weiterhin einen festinstallierten Sensorknoten auf, dessen absolute Position im Luftfahrzeug bekannt ist, so dass dieser Sensorknoten als fester Referenzpunkt dienen kann.

Auf diese Weise kann die Positionsbestimmung der einzelnen Sensorknoten erleichtert werden und die Ermittlung der Positionen in absoluter Form ist möglich.

Gemäß einem weiteren Ausführungsbeispiel der Erfindung ist ein Luftfahrzeug mit einem oben und im Folgenden beschriebenen Sensornetzwerk angegeben.

Gemäß einem weiteren Ausführungsbeispiel der Erfindung ist ein Verfahren zum Bestimmen einer örtlichen Anordnung von mehreren Sensorknoten in einem Luftfahrzeug angegeben, bei dem ein Parameter erfasst wird, auf dessen Basis eine Bestimmung der Position eines Sensorknotens innerhalb eines Sensornetzwerks möglich ist. Daraufhin erfolgt ein Übermitteln von Daten, die auf den erfassten Parametern basieren, an eine zentrale Recheneinheit. Daraufhin wird die Position des Sensorknotens auf Basis der übermittelten Daten bestimmt.

Im Folgenden werden mit Verweis auf die Figuren Ausführungsbeispiele der Erfindung beschrieben.

### Kurze Beschreibung der Figuren

Fig. 1 zeigt ein Sensornetzwerk gemäß einem Ausführungsbeispiel der Erfindung.
Fig. 2 zeigt ein Sensornetzwerk in einem ersten Betriebszustand, gemäß einem Ausführungsbeispiel der Erfindung.
Fig. 3 zeigt das Sensornetzwerk der Fig. 2 in einem zweiten Betriebszustand.
Fig. 4 zeigt das Sensornetzwerk der Fig. 2 in einem dritten Betriebszustand.
Fig. 5 zeigt ein Luftfahrzeug mit einem Sensornetzwerk gemäß einem Ausführungsbeispiel der Erfindung.
Fig. 6 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

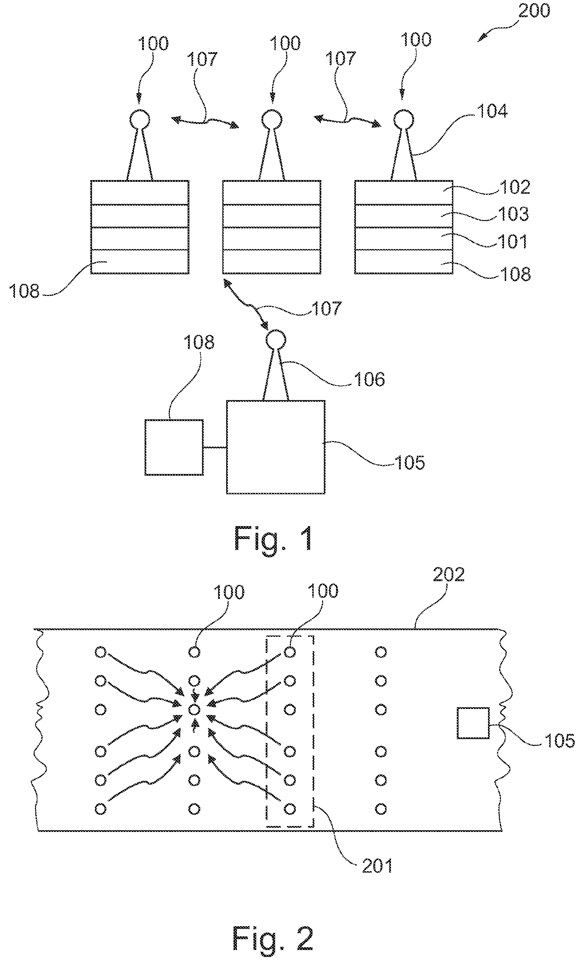

Fig. 1 zeigt ein Sensornetzwerk 200 mit mehreren Sensorknoten 100 und einer zentralen Recheneinheit 105. Es können natürlich noch zusätzliche Sensorknoten 100 vorgesehen sein.

Jeder Sensorknoten weist beispielsweise eine Sensoreinheit 101 zum Erfassen eines Parameters auf, auf dessen Basis eine Bestimmung der Position des Sensorknotens innerhalb des Sensornetzwerks möglich ist. Weiterhin weist jeder Sensorknoten eine Kommunikationseinheit 102 zum Übermitteln von Daten an die zentrale Recheneinheit 105 sowie zum Empfang von Daten von der zentralen Recheneinheit 105 auf. Weiterhin kann eine Energieversorgungseinheit 103 vorgesehen sein, die eine autarke Energieversorgung des entsprechenden Sensorknotens gewährleistet. Weiterhin ist eine Antenne 104 vorgesehen, mit deren Hilfe die Kommunikation erfolgen kann. Auch ist es möglich, dass die einzelnen Sensorknoten 100 untereinander kommunizieren. Dies ist durch die Pfeile 107 symbolisiert.

Zusätzlich kann jeder Sensorknoten einen eigenen Prozessor 108 aufweisen, der zum Beispiel eine Vorauswertung empfangener Signale vornehmen kann.

Auch die zentrale Recheneinheit 105 weist eine Antenne 106 auf.

Die Sensorknoten 100 weisen zusätzlich zu ihrer normalen Sensorfunktion (z. B. Messung einer Temperatur oder eines Druckes) oder ausschließlich die Eigenschaft auf, dass sie Hochfrequenzsignalparameter (HSP) messen können und diese gemessenen und ggf. vorausgewerteten Hochfrequenzsignalparameter an die zentrale Recheneinheit 105 senden. Die Hochfrequenzsignalparameter können u. a. Leistung, Laufzeit und/oder Frequenz des entsprechenden Hochfrequenzsignals betreffen.

Mit diesen gemessenen Werten kann eine Datenbank 108 der zentralen Recheneinheit 105 gefüllt werden. Eine Software kann mittels Korrelation aller dieser Werte eine Auswertung vornehmen, deren Ziel eine Bestimmung der Lage des Einbaus der Sensorknoten ist. Diese Lage kann je nach den Signalausbreitungsbedingungen und verwendetem HSP nur mit begrenzter Genauigkeit bestimmt werden, da der gemessenen HSP die geometrischen Distanzen zwischen den entsprechenden Sensorknoten nur begrenzt Genau abbildet. Durch zusätzliche Informationen die geometrischen Beziehungen der Sensorknoten untereinander betreffend kann die Wahrscheinlichkeit einer genauen Ortsbestimmung erhöht werden.

Ein Anwendungsbeispiel hierfür sind die Sitze in der Flugzeugkabine. Beim Bau des Flugzeuges werden die Sitze (fertig integriert, d. h. inklusive aller Komponenten und Sensoren) aus dem Lager entnommen und in das Flugzeug eingebaut. Nach dem Aktivieren des Sensornetzwerks wird jeder Sensorknoten seine gemessenen Hochfrequenzsignalparameterdaten an die zentrale Recheneinheit 105 liefern. Die zentrale Recheneinheit 105 bestimmt danach den absoluten Einbauort des entsprechenden Sensorknotens. Im Anschluss darauf werden dem Sensorknoten dann von der zentralen Recheneinheit 105 die Informationen übermittelt, an welcher Stelle sich der Sensorknoten befindet. Danach können alle im Sitz befindlichen Geräte konfiguriert werden. Mit diesem Schritt ist die Initialisierungsprozedur abgeschlossen und alle sitzspezifischen Funktionen können benutzt werden, z. B. Leselampe, Passagierruf ("PAX call), Unterhaltsgeräte (IFE, In-Flight Entertainment).

Um die Genauigkeit der Positionsbestimmung zu verbessern, können noch zusätzlich Sensoren eingebaut werden, deren absolute Lagen immer bekannt sind. Damit gibt es feste Referenzpunkte zur Messung der HSPs.

Ein weiteres Beispiel ist die Bestimmung des Vorhandenseins von losen Ausrüstungsgegenständen (z. B. Rettungswesten), wobei in diesem Fall die Sitzsensoren als erweiterte Referenzsignalquelle benutzt werden.

In diesem Fall sind zusätzliche Sensorknoten in den losen Einrichtungsgegenständen eingebaut.

Somit wird also eine drahtlose Verbindung zwischen und zu den Sensorknoten (die auch Ortungssensoren genannt werden) am und im Flugzeug hergestellt. Diese Sensorknoten senden ihre empfangenen Hochfrequenzsignalparameter zu einer zentralen Datenbank. Aus dieser kann mittels Korrelation der Daten die relative Lage aller Sensorknoten bestimmt werden. Damit lässt sich die Lage von Geräten (mit Hilfe der entsprechenden Geräteidentifikationsnummer, IDs) und Komponenten, an denen der Sensorknoten befestigt ist, bestimmen und in einer zentralen Flugzeugdatenbank eintragen. Damit kann der Bau, die Wartung und der Betrieb des Flugzeugs verbessert werden.

An dieser Stelle sei darauf hingewiesen, dass es sich bei den gemessenen Parametern um "Abfallprodukte" der normalen Kommunikation zwischen den einzelnen Sensorknoten bzw. den Sensorknoten und der zentralen Recheneinheit handeln kann. Es ist kein weiterer Datentransfer nötig, um die Parameter aufzunehmen. Vielmehr greift jeder Sensorknoten die normale Kommunikation ab und erfasst somit die zur Berechnung der Sensorknotenposition erforderlichen Parameter.

Fig. 2 zeigt ein Sensornetzwerk 200 mit einer Vielzahl an Sensorknoten 100, die als Sitzsensoren ausgeführt sind, also in den entsprechenden Flugzeugsitzen eingebaut bzw. daran befestigt sind.

Es ist zu berücksichtigen, dass das Sensornetzwerk auch für die Positionsbestimmung von Gepäckstücken eingesetzt werden kann. in diesem Fall kann ein Access Point innerhalb jedes Gepäckcontainers vorgesehen sein, der die von den Sensorknoten innerhalb des Containers an die zentrale Recheneinheit zu übermittelnden Daten sammelt und an die Recheneinheit weiterleitet.

Das Bezugszeichen 202 bezeichnet die Außenwand des Flugzeugrumpfes und das Bezugszeichen 201 bezeichnet eine Sitzreihe.

Jeder Sensorknoten 100 kann vom benachbarten Sensorknoten Signale empfangen, diese Signale ggf. vorab auswerten und entsprechende Signale (die entweder mit den empfangenen Signalen zusammenhängen oder unabhängig davon nur mit dem Einbauort des Sensors zusammenhängen) an andere Sensorknoten oder direkt an die zentrale Recheneinheit 105 übertragen.

In Fig. 2 ist der Schritt gezeigt, der direkt nach der Aktivierung des Sensornetzwerks erfolgen kann, dass nämlich jeder Sensor Signale aus seiner Umgebung (von benachbarten Sensorknoten) empfängt.

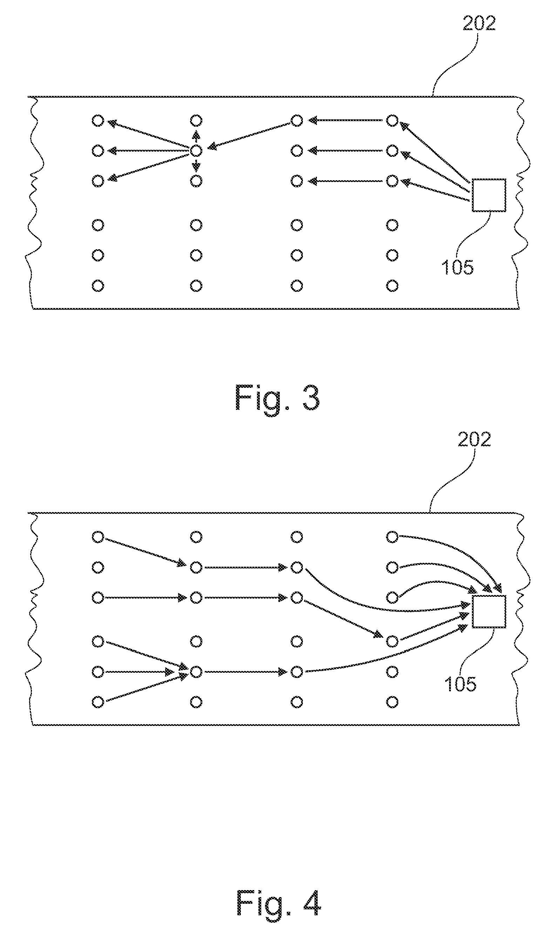

Fig. 3 zeigt einen weiteren Verfahrensschritt, bei dem jedem Sensorknoten von der zentralen Recheneinheit 105 eine entsprechende Ortsinformation übermittelt wird. Die Übermittlung kann entweder direkt von der zentralen Recheneinheit 105 an den entsprechenden Sensorknoten oder indirekt erfolgen. Unter einer indirekten Übermittlung ist zu verstehen, dass die Ortsinformation von der zentralen Recheneinheit 105 von einem Sensorknoten an einen nächsten Sensorknoten weitergegeben wird, bis die Information schließlich denjenigen Sensorknoten erreicht, für den sie gedacht ist.

Fig. 4 zeigt einen weiteren Verfahrensschritt, bei dem die HSP-Parameter von dem entsprechenden Sensorknoten an die zentrale Recheneinheit 105 übertragen werden. Die Übertragung erfolgt entweder direkt oder indirekt (indem weitere Sensorknoten dazwischen geschaltet sind, die die Information weiterreichen).

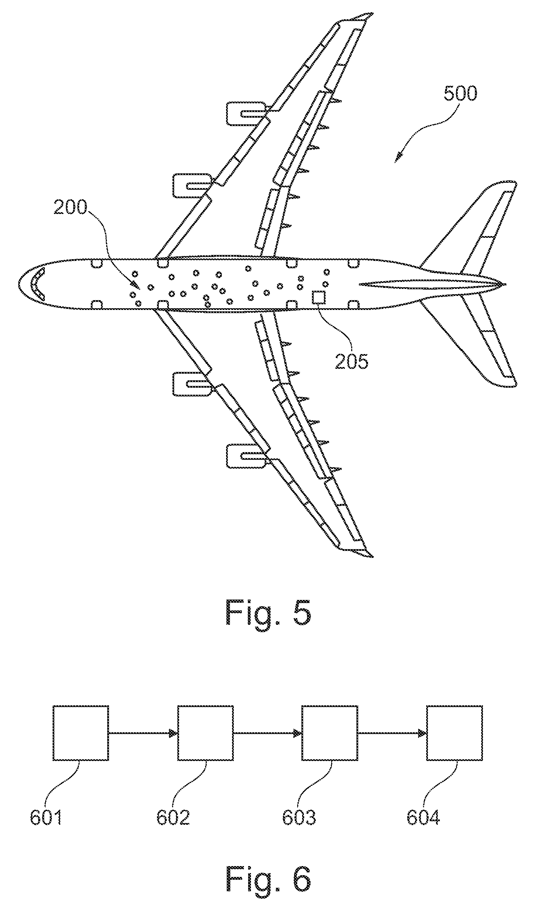

Fig. 5 zeigt ein Luftfahrzeug 500 mit einem Sensornetzwerk 200 gemäß einem Ausführungsbeispiel der Erfindung. Die Punkte im Rumpf bezeichnen die einzelnen Sensorknoten.

Fig. 6 zeigt ein Flussdiagramm eines Verfahrens gemäß einem Ausführungsbeispiel der Erfindung. In Schritt 601 erfolgt das Erfassen eines Hochfrequenzsignalparameters durch einen Sensorknoten. Dieser Hochfrequenzparameter hängt beispielsweise davon ab, welche Signale der Sensorknoten von seinen benachbarten Sensorknoten empfangen hat. In Schritt 602 werden dann entsprechende Daten, die auf den erfassten Hochfrequenzsignalparametern basieren, an die zentrale Recheneinheit übermittelt. In Schritt 603 bestimmt die zentrale Recheneinheit die Position jedes einzelnen Sensorknotens auf Basis der empfangenen Daten und in Schritt 604 übermittelt die zentrale Recheneinheit die entsprechenden Positionsinformationen an die einzelnen Sensorknoten.

Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Sensornetzwerk zum Bestimmen einer örtlichen Anordnung von mehreren Sensorknoten in einem Luftfahrzeug, wobei das Sensornetzwerk (200) aufweist:
eine Vielzahl an Sensorknoten (100), wobei jeder Sensorknoten eine Sensoreinheit (101) zum Erfassen eines Parameters, auf dessen Basis eine Bestimmung der Position des Sensorknotens innerhalb des Sensornetzwerks möglich ist, und eine Kommunikationseinheit (102) zum Übermitteln von Daten, die auf den erfassten Parameter basieren, an die zentrale Recheneinheit (105), aufweist;
eine zentrale Recheneinheit (105) zum Empfang der von den Sensorknoten übermittelten Daten, wobei
jeder Sensorknoten zur Übertragung von Signalen an andere Sensorknoten und zur Aufnahme von Signalparametern von benachbarten Sensorknoten ausgeführt ist, auf Basis derer die zentrale Recheneinheit die relativen Positionen der Sensorknoten im Verhältnis zueinander mittels Korrelation der übermittelten Daten berechnen kann.

2. Sensornetzwerk nach Anspruch 1,
ausgeführt zur Bestimmung der Positionen von Sitzen in einer Kabine des Luftfahrzeugs.

3. Sensornetzwerk nach Anspruch 2,
wobei die zentrale Recheneinheit (105) zur Bestimmung der Positionen der Sitze und zur darauffolgenden Übermittlung einer entsprechenden Positionsinformation ausgeführt ist, woraufhin eine Konfiguration der Sitze erfolgt.

4. Sensornetzwerk nach einem der Ansprüche 1 bis 3, weiterhin aufweisend:
einen fest installierten Sensorknoten (100), dessen absolute Position im Luftfahrzeug bekannt ist, so dass er als fester Referenzpunkt dienen kann.

5. Sensornetzwerk nach einem der vorhergehenden Ansprüche,
wobei der Parameter ein Hochfrequenzsignalparameter ist.

6. Sensornetzwerk nach einem der vorhergehenden Ansprüche,
wobei die Sensoreinheit (101) weiterhin zur Erfassung eines Messwerts ausgewählt aus der Gruppe bestehend aus Temperatur, Vibration, Beschleunigung, Dehnung, und Druck ausgeführt ist.

7. Sensornetzwerk nach einem der vorhergehenden Ansprüche, weiterhin aufweisend:
eine Energieversorgungseinheit (103) zur Versorgung des Sensorknotens mit elektrischer Energie;
wobei die Energieversorgungseinheit (103) zur autarken Energieversorgung des Sensorknotens (100) durch Energieumwandlung ausgeführt ist.

8. Sensornetzwerk nach Anspruch 7,
wobei die Energieversorgungseinheit (103) einen Vibrationsgenerator, einen thermoelektrischen Wandler, eine Antenne zur Aufnahme elektromagnetischer Energie, oder eine Photovoltaikeinheit zur Umwandlung von Licht in elektrische Energie zur dezentralen Energieversorgung des Sensorknotens (100) aufweist.

9. Luftfahrzeug (500) mit einem Sensornetzwerk (200) nach einem der Ansprüche 1 bis 8.

10. Verfahren zum Bestimmen einer örtlichen Anordnung von mehreren Sensorknoten in einem Luftfahrzeug, das Verfahren aufweisend die Schritte:
Übertragung von Signalen von einem Sensorknoten an andere Sensorknoten;
Aufnahme von Signalparametern von benachbarten Sensorknoten durch die Sensorknoten, auf deren Basis eine Bestimmung der relativen Positionen der Sensorknoten innerhalb eines Sensornetzwerks möglich ist;
Übermitteln von Daten, die auf den so erfassten Parametern basieren, an eine zentrale Recheneinheit (105);
Bestimmung der relativen Position jedes Sensorknotens (100) mittels Korrelation der übermittelten Daten.

## Claims

1. A sensor network for determining a local arrangement of several sensor nodes in an aircraft, wherein the sensor network (200) comprises:
a plurality of sensor nodes (100), wherein each sensor node comprises a sensor unit for acquiring a parameter on the basis of which a determination of the position of the sensor node within the sensor network is possible, and comprises a communication unit (102) for transmitting data, which are based on the acquired parameter, to the central processing unit (105);
a central processing unit (105) for receiving the data transmitted by the sensor nodes, wherein
each sensor node is configured for the transmission of signals to other sensor nodes and is configured for the receipt of signal parameters from neighbouring sensor nodes, on the basis of which the central processing unit can calculate the relative positions of the sensor nodes with respect to the other sensor nodes through a correlation of the transmitted data.

2. The sensor network of claim 1,
configured to determine the positions of seats in a cabin of the aircraft.

3. The sensor network of claim 2,
wherein the central processing unit (105) is configured to determine the positions of the seats and subsequent transmission of a corresponding position information, whereupon a configuration of the seats is performed.

4. The sensor network of one of claims 1 to 3, further comprising:
a permanently installed sensor node (100) the absolute position of which in the aircraft is known such that it may serve as a fixed reference point.

5. The sensor network of one of the preceding claims,
wherein the parameter is a high-frequency parameter.

6. The sensor network of one of the preceding claims,
wherein the sensor unit (101) is further configured for acquiring a measured value selected from the group consisting of temperature, vibration, acceleration, expansion and pressure.

7. The sensor network of one of the preceding claims, further comprising:
a power supply unit (103) for supplying the sensor node with electrical energy;
wherein the power supply unit (103) is configured to autonomously supply power to the sensor node through energy conversion.

8. The sensor network of claim 7,
wherein the power supply unit (103) comprises a vibration generator, a thermoelectric converter, an antenna for receiving electromagnetic energy, or a photovoltaic unit for converting light into electrical energy, for decentralized power supply of the sensor node (100).

9. An aircraft (500) with a sensor network (200) of one of claims 1 to 8.

10. A method for determining a local arrangement of several sensor nodes in an aircraft, the method comprising the steps of:
transmitting signals from one sensor to other sensor nodes;
acquiring signal parameters from neighbouring sensor nodes through the sensor nodes, on the basis of which a determination of the relative positions of the sensor nodes within a sensor network is possible;
transmitting data which are based on the parameters thus acquired, to a central processing unit (105);
determination of the relative position of each sensor node (100) through correlation of the transmitted data.

## Revendications

1. Réseau de capteurs pour déterminer une disposition locale de plusieurs noeuds de capteurs dans un aéronef, le réseau de capteurs (200) présentant :
une pluralité de noeuds de capteurs (100), chaque noeud de capteurs présentant une unité de capteurs (101) pour la détection d'un paramètre, sur la base duquel une détermination de la position du noeud de capteurs à l'intérieur du réseau de capteurs est possible, et une unité de communication (102) pour la transmission de données, basées sur le paramètre détecté, à l'unité de calcul (105) ;
une unité de calcul centrale (105) pour la réception des données transmises par les noeuds de capteurs, chaque noeud de capteurs étant réalisé pour la transmission de signaux à d'autres noeuds de capteurs et pour la réception de paramètres de signaux à partir de noeuds de capteurs adjacents, sur la base desquels l'unité de calcul centrale peut calculer les positions relatives des noeuds de capteurs en relation mutuelle au moyen de la corrélation des données transmises.

2. Réseau de capteurs selon la revendication 1,
réalisé pour la détermination des positions de sièges dans une cabine de l'aéronef.

3. Réseau de capteurs selon la revendication 2,
dans lequel l'unité de calcul centrale (105) est réalisée pour la détermination des positions des sièges suivie de la transmission d'une information de position correspondante, après quoi une configuration des sièges est effectuée.

4. Réseau de capteurs selon l'une des revendications 1 à 3, présentant en outre :
un noeud de capteurs (100) installé de manière fixe, dont la position absolue dans l'aéronef est connue, de telle sorte qu'il peut servir de point de référence fixe.

5. Réseau de capteurs selon l'une des revendications précédentes,
dans lequel le paramètre est un paramètre de signaux haute fréquence.

6. Réseau de capteurs selon l'une des revendications précédentes,
dans lequel l'unité de capteurs (101) est en outre réalisée pour la détection d'une valeur de mesure choisie parmi le groupe constitué de température, vibration, accélération, extension, et pression.

7. Réseau de capteurs selon l'une des revendications précédentes, présentant en outre :
une unité d'alimentation en énergie (103) pour l'alimentation du noeud de capteurs en énergie électrique ;
dans lequel l'unité d'alimentation en énergie (103) est réalisée pour l'alimentation en énergie autonome du noeud de capteurs (100) par transformation d'énergie.

8. Réseau de capteurs selon la revendication 7,
dans lequel l'unité d'alimentation en énergie (103) présente un générateur de vibrations, un transformateur thermoélectrique, une antenne pour la réception d'énergie électromagnétique, ou une unité photovoltaïque pour la transformation de lumière en énergie électrique pour l'alimentation décentralisée en énergie des noeuds de capteurs (100).

9. Aéronef (500) comportant un réseau de capteurs (200) selon l'une des revendications 1 à 8.

10. Procédé pour la détermination d'une disposition locale de plusieurs noeuds de capteurs dans un aéronef, le procédé comprenant les étapes de :
transmission de signaux d'un noeud de capteurs à d'autres noeuds de capteurs ;
réception de paramètres de signaux depuis des noeuds de capteurs adjacents par les noeuds de capteurs, sur la base desquels une détermination des positions relatives des noeuds de capteurs à l'intérieur du réseau de capteurs est possible ;
transmission de données, basées sur les paramètres ainsi détectés, à l'unité de calcul (105) ;
détermination de la position relative de chaque noeud de capteurs (100) au moyen de la corrélation des données transmises.
